# EUROPEAN PATENT SPECIFICATION

(11) **EP 4 057 439 B1**
(45) Date of publication and mention of the grant of the patent: **23.07.2025**
(21) Application number: 22156080.8
(22) Date of filing: 10.02.2022
(51) Int. Cl.: H01M 50/543, H01M 50/553, H01M 50/562, H01M 50/564, H01M 50/566

(54) **TERMINAL COMPONENT AND ELECTRICITY STORAGE DEVICE**
ENDGERÄTEKOMPONENTE UND ELEKTRIZITÄTSSPEICHERVORRICHTUNG
COMPOSANT DE TERMINAL ET DISPOSITIF DE STOCKAGE D'ÉLECTRICITÉ

(30) Priority: 11.03.2021 JP 2021039714
(43) Date of publication of application: 14.09.2022
(73) Proprietor: Prime Planet Energy & Solutions, Inc., Chuo-ku Tokyo 103-0022 (JP)
(72) Inventor: YONEDA, Koshiro, Tokyo, 103-0022 (JP); SUZUKI, Kosuke, Tokyo, 103-0022 (JP); SAKURAI, Takahiro, Tokyo, 103-0022 (JP)
(74) Representative: Kuhnen & Wacker Patent- und Rechtsanwaltsbüro PartG mbB

(56) References cited:
- EP-A1- 3 972 042
- US-A1- 2012 055 909
- US-A1- 2014 004 408

## Description

### TECHNICAL FIELD

The present disclosure relates to a terminal component and an electricity storage device.

### BACKGROUND

Document JP 2016-018675 A discloses an invention related to a secondary battery. The secondary battery disclosed in the publication includes positive and negative electrode external terminals. The batteries are connected in series by a bus bar made of the same kind of material as that of one of the positive and negative electrode external terminals. The secondary battery includes a metal member that is made of a material having excellent weldability to the material of one of the external terminals and is ultrasonic pressure-welded to the other one of the positive and negative electrode external terminals. The metal member has a bus bar joint face to which the bus bar is to be welded. Document US 2012/055909 A1 discloses a method of laser-welding for uniform welding of a member with large laser reflectance on a surface thereof. There, a first laser welding step includes a surface roughening step in which a first laser processing device irradiates laser light to a surface of a welding section between a negative electrode terminal and a negative electrode lead and carries out roughening, thereby forming a laser marker on the surface; and a second welding step in which a second laser processing device irradiates laser light to each welding portion roughened in the surface roughening step and melts each welding portion, thereby carrying out the laser-welding of the negative electrode terminal to the negative electrode lead. Document US 2014/004408 A1 discloses a battery with: an electricity-generating element; an exterior; an external terminal member; a current-collecting terminal member having a first end which is connected to the electricity-generating element and a second end, which extends outward of the exterior; and a platy connection member that, outside the exterior, interconnects the current-collecting terminal member and external terminal member. In the welding between the connection member and an outer peripheral side end portion of a swaged portion in which the second end of the current-collecting terminal member has been swaged toward an insertion hole of the connection member, an acute angle between a connecting line connecting the weld portion to a center of the second end and a longitudinally extending center line of the lid member is greater than or equal to 45 degrees. Document EP 3 972 042 A1, which is prior art under Art. 54(3) EPC, discloses a terminal for a secondary battery with the features of the preamble of the independent claim.

### SUMMARY

When such a secondary battery is used for in-vehicle applications, vehicle vibration during travelling may be transmitted to the external terminals of the secondary battery through the bus bar. When the external terminal is provided with a structure having a dissimilar metal joint, the vibration is transmitted to the dissimilar metal joint.

The present inventors understand that dissimilar metal joint parts joined by a joining method such as ultrasonic pressure-welding tend to result in large variations in joining strength between the individual joined parts during the mass production process. The present inventors are also considering, not merely ultrasonic pressure-welding of dissimilar metals, but a combination of ultrasonic pressure-welding of dissimilar metals with press-fitting one of the metals with the other one of the metals. However, when ultrasonic pressure-welding is to be carried out after one of the metals is press-fitted to the other one, it is difficult to apply the ultrasonic vibration required for ultrasonic pressure-welding to the metals because the two metals are press-fitted to each other. On the other hand, when the metals are press-fitted together after ultrasonic pressure-welding is carried out, it is feared that the strain resulting from the press-fitting process may adversely affect the portion that has undergone ultrasonic pressure-welding and deteriorate the quality of the portion that has been joined by ultrasonic pressure-welding.

In accordance with the present disclosure, as defined in claim 1, a terminal component includes a first metal and a second metal overlapped with the first metal. A boundary between the first metal and the second metal includes: a press-fit portion in which one of the first metal and the second metal is press-fitted to the other one; a joined portion, which is an ultrasonic welded or resistance welded portion, disposed at a location different from the press-fit portion, in which the first metal and the second metal are overlapped and joined together; and a gap formed around the joined portion. Because the just-described terminal component includes the gap around the joined portion, quality of joining is improved at the joined portion.

The first metal and the second metal are be made of dissimilar metals. The gap is continuously present around the joined portion. Because the gap is present continuously around the joined portion, quality of joining is significantly improved at the joined portion.

The first metal includes a shaft portion and a flange portion extending radially outward from one end of the shaft portion. The second metal has malleability and have lower rigidity than the first metal. The second metal is overlapped on an end of the first metal including the flange portion, and is press-fitted to a circumferential edge of the flange portion.

In an example not according to the claims, in a location where the first metal and the second metal are overlapped with each other, at least one of the first metal and the second metal may include a protrusion, and the other one may include a recess in which the protrusion is accommodated. The first metal and the second metal may be joined together at a location where a tip of the protrusion is in contact with a bottom portion of the recess, and a circumferentially continuous gap may be formed around the protrusion.

The first metal includes a first protrusion protruding toward the second metal, the first protrusion disposed at an end thereof including the flange portion. The second metal includes a second protrusion disposed at a location overlapped on the end of the first metal having the flange portion, the second protrusion protruding toward the first metal and being joined to the first protrusion.

In another embodiment, an electricity storage device may include a battery case and an electrode terminal attached to the battery case, wherein the electrode terminal includes a part including the above-described terminal component.

### BRIEF DESCRIPTION OF THE DRAWINGS

Fig. 1 is a partial cross-sectional view of a lithium-ion secondary battery 10.
Fig. 2 is a cross-sectional view taken along line II-II in Fig. 1.
Fig. 3 is a cross-sectional view taken along line III-III in Fig. 2.
Fig. 4 is a cross-sectional view schematically illustrating a terminal component 200.
Fig. 5 is a perspective view schematically illustrating a battery pack 100.
Fig. 6 is a cross-sectional view schematically illustrating a terminal component 200A.
Fig. 7 is a cross-sectional view schematically illustrating a terminal component 200B.
Fig. 8 is a cross-sectional view schematically illustrating a terminal component 200C.
Fig. 9 is a cross-sectional view schematically illustrating a terminal component 200D according to the present invention of claim 1. 200D.

### DETAILED DESCRIPTION

Hereinbelow, embodiments of a terminal component and an electricity storage device according to the present disclosure are described. It should be noted, however, that the disclosed embodiments are, of course, not intended to limit the invention. The present invention is defined by the claims.

The drawings are depicted schematically and do not necessarily reflect actual objects. The features and components that exhibit the same effects are designated by the same reference symbols as appropriate, and the description thereof will not be repeated.

### Electricity Storage Device

In the present description, the term "electricity storage device" refers to a device that is capable of charging and discharging. The electricity storage device may include lithium polymer battery and lithium-ion capacitor, in addition to a variety of batteries generally referred to as lithium-ion battery and lithium secondary battery. The secondary battery refers to a battery that is capable of charging and discharging repeatedly in association with transfer of charge carriers between positive and negative electrodes. Herein, a lithium-ion secondary battery is illustrated as an example of one embodiment of the electricity storage device.

### Lithium-ion Secondary Battery 10

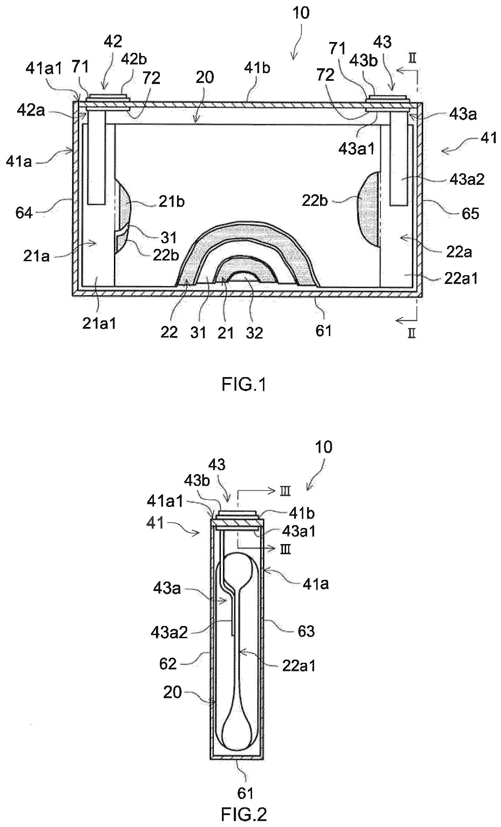

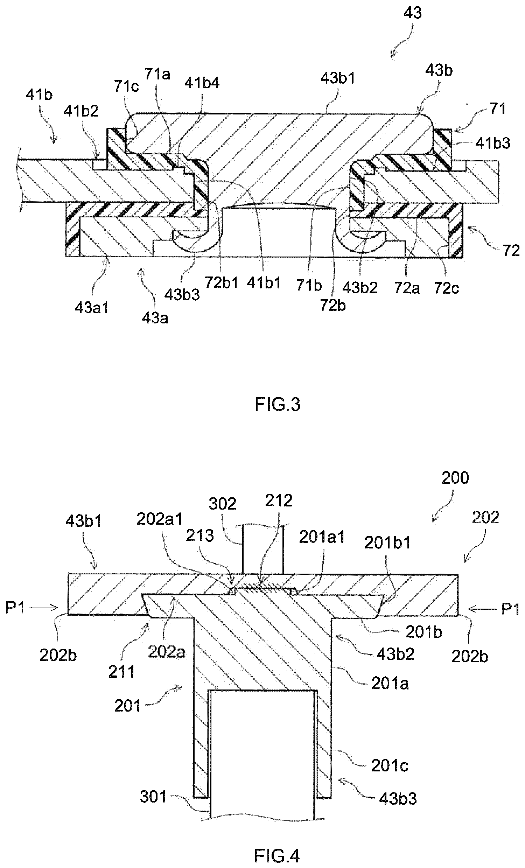

Fig. 1 is a partial cross-sectional view of a lithium-ion secondary battery 10. Fig. 1 depicts the battery interior that is exposed along one wide side surface of a battery case 41 in substantially a rectangular parallelepiped shape. The lithium-ion secondary battery 10 shown in Fig. 1 is what is called a sealed battery. Fig. 2 is a cross-sectional view taken along line II-II in Fig. 1. Fig. 2 schematically shows a partial cross-sectional view of the battery interior that is exposed along one narrower side surface of the battery case 41 in substantially a rectangular parallelepiped shape. The terminal components of Fig.4 and Fig. 6-8 are not according to claim 1.

As illustrated in Fig. 1, the lithium-ion secondary battery 10 includes an electrode assembly 20, a battery case 41, a positive electrode terminal 42, and a negative electrode terminal 43.

### Electrode Assembly 20

The electrode assembly 20 is covered with an insulating film (not shown) and is enclosed in the battery case 41. The electrode assembly 20 includes a positive electrode sheet 21 serving as a positive electrode element, a negative electrode sheet 22 serving as a negative electrode element, and separator sheets 31 and 32 serving as separators. Each of the positive electrode sheet 21, the first separator sheet 31, the negative electrode sheet 22, and the second separator sheet 32 is a long strip-shaped member.

The positive electrode sheet 21 includes a positive electrode current collector foil 21a (for example, an aluminum foil) having a predetermined width and a predetermined thickness, a positive electrode active material layer 21b containing a positive electrode active material, and an uncoated portion 21a1 defined along one lateral edge of the positive electrode current collector foil 21a with a constant width. The positive electrode active material layer 21b is formed on both faces of the positive electrode current collector foil 21a, except for the uncoated portion 21a1. In a lithium-ion secondary battery, for example, the positive electrode active material is a material that is capable of releasing lithium ions during charge and absorbing lithium ions during discharge, such as lithium-transition metal composite material. Generally, other than the lithium-transition metal composite material, various materials have been proposed for use as the positive electrode active material, and the positive electrode active material is not limited to any particular material.

The negative electrode sheet 22 includes a negative electrode current collector foil 22a (copper foil herein) having a predetermined width and a predetermined thickness, a negative electrode active material layer 22b containing a negative electrode active material, and an uncoated portion 22a1 defined along one lateral edge of the negative electrode current collector foil 22a with a constant width. The negative electrode active material layer 22b is formed on both faces of the negative electrode current collector foil 22a, except for the uncoated portion 22a1. In a lithium-ion secondary battery, for example, the negative electrode active material is a material that is capable of absorbing lithium ions during charge and releasing the absorbed lithium ions during discharge, such as graphite. Generally, other than graphite, various materials have been proposed for use as the negative electrode active material, and the negative electrode active material is not limited to any particular material.

Each of the separator sheets 31 and 32 may be formed of, for example, an electrolyte permeable porous resin sheet with required heat resistance. Various proposals have been made about the separator sheets 31 and 32, and there is no particular restriction on the separator sheets 31 and 32.

Here, the negative electrode active material layer 22b is formed, for example, so as to be wider than the positive electrode active material layer 21b. The width of the separator sheets 31 and 32 is wider than the width of the negative electrode active material layer 22b. The uncoated portion 21a1 of the positive electrode current collector foil 21a and the uncoated portion 22a1 of the negative electrode current collector foil 22a are arranged at laterally opposite ends. The positive electrode sheet 21, the first separator sheet 31, the negative electrode sheet 22, and the second separator sheet 32 are aligned longitudinally, stacked one on another, and wound together. The negative electrode active material layer 22b covers the positive electrode active material layer 21b with the separator sheets 31 and 32 interposed therebetween. The negative electrode active material layer 22b is covered with the separator sheets 31 and 32. The uncoated portion 21a1 of the positive electrode current collector foil 21a protrudes from one of the lateral edges of the separator sheets 31 and 32. The uncoated portion 22a1 of the negative electrode current collector foil 22a protrudes from the other one of the lateral edges of the separator sheets 31 and 32.

As illustrated in Fig. 1, the electrode assembly 20 is formed in a flattened shape along one plane containing the winding axis so that it can be enclosed in a case main body 41a of the battery case 41. Along the winding axis of the electrode assembly 20, the uncoated portion 21a1 of the positive electrode current collector foil 21a is disposed at one end, and the uncoated portion 22a1 of the negative electrode current collector foil 22a is disposed at the opposite end.

### Battery Case 41

As illustrated in Fig. 1, the battery case 41 houses the electrode assembly 20. The battery case 41 includes a case main body 41a that is in a substantially rectangular parallelepiped shape one side surface of which is open, and a lid 41b that is fitted to the opening. In this embodiment, the case main body 41a and the lid 41b are formed of aluminum or an aluminum alloy composed mainly of aluminum, from the viewpoint of reducing the weight and ensuring the required rigidity.

### Case Main Body 41a

As illustrated in Figs. 1 and 2, the case main body 41a has a substantially rectangular parallelepiped shape one side face of which is open. The case main body 41a includes a substantially rectangular bottom surface portion 61, a pair of wider side surface portions 62 and 63, and a pair of narrower side surface portions 64 and 65. The pair of wider side surface portions 62 and 63 extend upward from respective longer sides of the bottom surface portion 61. The pair of narrower side surface portions 64 and 65 extend upward from respective shorter sides of the bottom surface portion 61. An open end 41a1, which is surrounded by the pair of wider side surface portions 62 and 63 and the pair of narrower side surface portions 64 and 65, is formed in one end face of the case main body 41a.

### Lid 41b

The lid 41b is fitted to the open end 41a1 of the case main body 41a, which is surrounded by the longer sides of the pair of wider side surface portions 62 and 63 and the shorter sides of the pair of narrower side surface portions 64 and 65. The peripheral edge portion of the lid 41b is joined to the edge of the open end 41a1 of the case main body 41a. The joining may be achieved by, for example, continuous welding, with no gaps. Such welding may be carried out by, for example, laser welding.

In this embodiment, the positive electrode terminal 42 and the negative electrode terminal 43 are fitted to the lid 41b. The positive electrode terminal 42 includes an internal terminal 42a and an external terminal 42b. The negative electrode terminal 43 includes an internal terminal 43a and an external terminal 43b. Each of the internal terminals 42a and 43a is fitted to the inside of the lid 41b with an insulator 72 interposed. Each of the external terminal 42b and 43b is fitted to the outside of the lid 41b with a gasket 71 interposed. Each of the internal terminals 42a and 43a extends inward of the case main body 41a. The internal terminal 42a of the positive electrode is connected to the uncoated portion 21a1 of the positive electrode current collector foil 21a. The internal terminal 43a of the negative electrode is connected to the uncoated portion 22a1 of the negative electrode current collector foil 22a.

As illustrated in Fig. 1, the uncoated portion 21a1 of the positive electrode current collector foil 21a and the uncoated portion 22a1 of the negative electrode current collector foil 22a of the electrode assembly 20 are attached to the respective internal terminals 42a and 43a, which are respectively attached to opposite longitudinal side-edge portions of the lid 41b. The electrode assembly 20 is attached to the internal terminals 42a and 43a, which are attached to the lid 41b, and the electrode assembly 20 is enclosed in the battery case 41. Herein, the electrode assembly 20 is shown to be a wound-type electrode assembly as an example. The structure of the electrode assembly 20 is not limited to such an embodiment. For example, it is possible that the structure of the electrode assembly 20 may be a stacked structure in which positive electrode sheets and negative electrode sheets are alternately stacked on each other with separators interposed therebetween. It is also possible that a plurality of electrode assemblies 20 may be housed in the battery case 41.

Fig. 3 is a cross-sectional view taken along line III-III in Fig. 2. Fig. 3 shows a cross section of the portion where the negative electrode terminal 43 is attached to the lid 41b. In this embodiment, the negative electrode external terminal 43b uses a member in which dissimilar metals are joined together. In Fig. 3, the structure of the dissimilar metals that form the external terminal 43b or the interface of the dissimilar metals is not shown, but the cross-sectional shape of the external terminal 43b is only schematically illustrated.

As illustrated in Fig. 3, the lid 41b includes a mounting hole 41b1 into which the negative electrode external terminal 43b is fitted. The mounting hole 41b1 penetrates through the lid 41b at a predetermined position of the lid 41b. The negative electrode internal terminal 43a and the negative electrode external terminal 43b are fitted into the mounting hole 41b1 of the lid 41b, with the gasket 71 and the insulator 72 interposed. A stepped portion 41b2, to which the gasket 71 is attached, is provided around the outer circumference of the mounting hole 41b1. The stepped portion 41b2 is provided with a seating surface 41b3 on which the gasket 71 is disposed. The seating surface 41b3 is provided with a protrusion 41b4 for positioning the gasket 71.

Herein, as illustrated in Fig. 3, the negative electrode external terminal 43b includes a head portion 43b1, a shaft portion 43b2, and a press-fit piece 43b3. The head portion 43b1 is a portion to be disposed outside the lid 41b. The head portion 43b1 is a substantially flat-plate shaped portion that is larger than the mounting hole 41b1. The shaft portion 43b2 is a portion that is to be fitted into the mounting hole 41b1 with the gasket 71 interposed. The shaft portion 43b2 protrudes downward from the substantially central part of the head portion 43b1. The press-fit piece 43b3 is a portion that is to be press-fitted to the negative electrode internal terminal 43a inside the lid 41b, as illustrated in Fig. 3. The press-fit piece 43b3 extends from the shaft portion 43b2. The press-fit piece 43b3 is inserted through the lid 41b and thereafter bent to be press-fitted the negative electrode internal terminal 43a.

### Gasket 71

The gasket 71 is a member that is attached to the mounting hole 41b1 and the seating surface 41b3 of the lid 41b, as illustrated in Fig. 3. In this embodiment, the gasket 71 includes a seat portion 71a, a boss portion 71b, and a side wall 71c. The seat portion 71a is a portion to be fitted onto the seating surface 41b3, which is provided in the outer surface of the lid 41b around the mounting hole 41b1 of the lid 41b. The seat portion 71a has a substantially flat surface that matches the seating surface 41b3. The seat portion 71a includes a recess corresponding to the protrusion 41b4 of the seating surface 41b3. The boss portion 71b protrudes from the bottom surface of the seat portion 71a. The boss portion 71b has an outer shape that follows the inner surface of the mounting hole 41b1 so that it can be fitted into the mounting hole 41b1 of the lid 41b. The inner surface of the boss portion 71b forms a mounting hole to which the shaft portion 43b2 of the external terminal 43b is fitted. The side wall 71c extends upward from the peripheral edge of the seat portion 71a. The head portion 43b1 of the external terminal 43b is fitted to a portion of the gasket 71 that is surrounded by the side wall 71c of the gasket 71.

The gasket 71 is disposed between the lid 41b and the external terminal 43b to ensure electrical insulation between the lid 41b and the external terminal 43b. The gasket 71 also ensures hermeticity of the mounting hole 41b1 of the lid 41b. From such viewpoints, it is possible to use a material that is excellent in chemical resistance and weather resistance for the gasket 71. In this embodiment, the gasket 71 uses PFA. PFA is a tetrafluoroethylene-perfluoroalkyl vinyl ether copolymer. It should be noted that the material that may be used for the gasket 71 is not limited to PFA.

### Insulator 72

The insulator 72 is a member to be fitted inside the lid 41b, around the mounting hole 41b1 of the lid 41b. The insulator 72 includes a base portion 72a, a hole 72b, and a side wall 72c. The base portion 72a is a portion disposed along the inner surface of the lid 41b. In this embodiment, the base portion 72a is a substantially flat-plate shaped portion. The base portion 72a is disposed along the inner surface of the lid 41b. The base portion 72a has a size such that it does not jut out from the lid 41b so as to be contained within the case main body 41a. The hole 72b is formed correspondingly to the mounting hole 41b1. In this embodiment, the hole 72b is formed at a substantially central portion of the base portion 72a. In the surface of the insulator 72 that faces the inner surface of the lid 41b, a recessed stepped portion 72b1 is provided around the hole 72b. The stepped portion 72b1 accommodates the tip of the boss portion 71b of the gasket 71, which is fitted to the mounting hole 41b1. The side wall 72c extends downward from the peripheral edge of the base portion 72a. The base portion 72a accommodates a base portion 43a1, which is provided at one end of the negative electrode internal terminal 43a. Because the insulator 72 is disposed inside the battery case 41, the insulator 72 may be provided with required chemical resistance. In this embodiment, the insulator 72 uses PPS. PPS means a polyphenylene sulfide resin. It should be noted that the material that may be used for the insulator 72 is not limited to PPS.

The negative electrode internal terminal 43a includes a base portion 43a1 and a connecting piece 43a2 (see Figs. 1 and 2). The base portion 43a1 is a portion to be attached to the base portion 72a of the insulator 72. In this embodiment, the base portion 43a1 has a shape corresponding to the inside of the side wall 72c around the base portion 72a of the insulator 72. As illustrated in Figs. 1 and 2, the connecting piece 43a2 extends from one end of the base portion 43a1 toward the inside of the case main body 41a so as to be connected to the uncoated portion 22a1 of the negative electrode of the electrode assembly 20.

In this embodiment, while the boss portion 71b is fitted into the mounting hole 41b1, the gasket 71 is attached to the outside of the lid 41b. The external terminal 43b is fitted to the gasket 71. At that time, the shaft portion 43b2 of the external terminal 43b is inserted through the boss portion 71b of the gasket 71, and the head portion 43b1 of the external terminal 43b is placed on the seat portion 71a of the gasket 71. The insulator 72 and the negative electrode terminal 43 are attached to the inside of the lid 41b. Then, as illustrated in Fig. 3, the press-fit piece 43b3 of the external terminal 43b is bent so as to be press-fitted to the base portion 43a1 of the negative electrode terminal 43. The press-fit piece 43b3 of the external terminal 43b and the base portion 43a1 of the negative electrode terminal 43 may be partially metal-joined together in order to improve electrical conductivity.

The required level of resistance to oxidation and reduction that is required by the positive electrode internal terminal 42a of the lithium-ion secondary battery 10 is not as high as that is required by the negative electrode. From the viewpoint of required resistance to oxidation and reduction and weight reduction, aluminum may be used the positive electrode internal terminal 42a. However, the required level of resistance to oxidation and reduction that is required by the negative electrode internal terminal 43a is higher than that is required by the positive electrode. From this viewpoint, copper may be used for the negative electrode internal terminal 43a. On the other hand, aluminum or aluminum alloy may be used for the bus bar to which the external terminal 43b is connected, from the viewpoint of weight reduction and cost reduction.

The present inventors are considering the use of copper for a portion of the external terminal 43b to which the internal terminal 43a is joined, and the use of aluminum or aluminum alloy for a portion of the external terminal 43b to which a bus bar is connected. In order to accomplish such a structure, a member in which copper and aluminum are joined by a dissimilar metal joint is used for the external terminal 43b in this embodiment. Generally, it is difficult for dissimilar metal joining to ensure sufficient joining strength. For this reason, the present inventors are considering additionally adopting a mechanical fitting structure of copper and aluminum. Note that an example illustrated herein adopts a member in which copper and aluminum are joined together for the external terminal 43b, taking the lithium-ion secondary battery 10 as an example. The two metals that constitute the external terminal 43b are not limited to copper and aluminum. Hereinafter, the structure of a terminal component 200 that constitutes the negative electrode external terminal 43b is described.

### Terminal Component 200

Fig. 4 is a cross-sectional view schematically illustrating a terminal component 200. The terminal component 200 may be used for the negative electrode external terminal 43b shown in Fig. 3. Fig. 4 schematically shows the structure of dissimilar metals and the interface of dissimilar metals in the terminal component 200. Fig. 4 also schematically shows a manufacturing process in which a first metal 201 and a second metal 202, which constitute the terminal component 200, are joined together.

As illustrated in Fig. 4, the terminal component 200 includes a first metal 201 and a second metal 202 disposed on the first metal 201. The first metal 201 and the second metal 202 are composed of dissimilar metals. A press-fit portion 211, a joined portion 212, and a gap 213 are provided at a boundary of the first metal 201 and the second metal 202. In the exemplary embodiment shown in Fig. 4, the second metal 202 is press-fitted to a circumferential edge portion of the first metal 201.

In this embodiment, the first metal 201 includes a shaft portion 201a and a flange portion 201b extending radially outward from one end of the shaft portion 201a. An outer edge 201b1 of the flange portion 201b is provided with a press-fitted portion to which the second metal 202 is to be press-fitted. In this embodiment, the outer edge 201b1 of the flange portion 201b, to which the second metal 202 is press-fitted, includes a sloping surface that slopes in such a manner that its outer diameter gradually decreases from one end surface of the first metal 201 including the flange portion 201b toward the other end surface thereof. On one end of the first metal 201 where the flange portion 201b is provided, a protrusion 201a1 is provided at an end of the shaft portion 201a. On the other end of the first metal 201 that is opposite to the end where the flange portion 201b is provided, the shaft portion 201a is further provided with a portion 201c that later forms the press-fit piece 43b3 that is to be press-fitted to the internal terminal 43a.

Herein, the first metal 201 is disposed facing the inside of the battery case 41 so as to constitute a portion of the terminal component 200 that is to be joined to the negative electrode internal terminal 43a. In this embodiment, the first metal 201 is composed of copper. A nickel coating film may be formed, when necessary, on at least a part of the terminal component 200 where a portion composed of copper is exposed. When the nickel coating film is formed, damages originating from copper are prevented appropriately. The nickel coating film may be formed by, for example, plating.

The second metal 202 uses a metal that has malleability and a lower rigidity than the first metal 201. In this embodiment, the second metal 202 is composed of aluminum or an aluminum alloy. The second metal 202 includes a recessed portion 202a such as to cover an end of the first metal 201 including the flange portion 201b. In this embodiment, a recess 202a1 that accommodates the protrusion 201a1 of the first metal 201 is formed at the bottom of the recessed portion 202a. The outer diameter of the recess 202a1 is a size larger than the protrusion 201a1 of the first metal 201, and the depth of the recess 202a1 is approximately the same as the height of the protrusion 201a1.

The second metal 202 is overlapped with the end of the first metal 201 where the flange portion 201b is formed. In this case, the end of the first metal 201 where the flange portion 201b is formed is placed in the recessed portion 202a of the second metal 202. In addition, the protrusion 201al provided on the end of the first metal 201 where the flange portion 201b is formed is placed in the recess 202a1 provided in the recessed portion 202a of the second metal 202. In this case, the bottom of the recess 202a1 and the top portion of the protrusion 201al face each other in such a state as to be in contact with each other or adjacent to each other. In this way, the height of the protrusion 201a1 and the depth of the recess 202a1 may be determined in advance. Fig. 4 shows a condition in which the outer edge 201b1 of the flange portion 201b of the first metal 201 is press-fitted into the inner surface of the recessed portion 202a of the second metal 202. Before being press-fitted, the recessed portion 202a of the second metal 202 may be formed to be a substantially circular recess that is slightly larger than the outer diameter of the flange portion 201b of the first metal 201.

Fig. 4 illustrates how the first metal 201 and the second metal 202 are ultrasonic welded together. As illustrated in Fig. 4, an anvil 301 is attached to the first metal 201 with the first metal 201 and the second metal 202 being overlapped with each other. On the other hand, a horn 302 is attached to the second metal 202. The horn 302 and the anvil 301 are disposed so as to sandwich a location at which the bottom of the recess 202a1 and the top portion of the protrusion 201a1 face each other. Then, the horn 302 and the anvil 301 apply pressure to the first metal 201 and the second metal 202 so that the first metal 201 and the second metal 202 make contact with each other at the bottom of the recess 202a1 and the top portion of the protrusion 201a1. Furthermore, ultrasonic vibration is applied by the horn 302 to join the bottom of the recess 202a1 and the top portion of the protrusion 201a1. In this case, a gap 213 exists around a joined portion 212. This ensures that the bottom of the recess 202a1 and the top portion of the protrusion 201a1 are in contact with each other. Furthermore, the vibration imparted by the horn 302 intensively acts on the location where the bottom of the recess 202a1 and the top portion of the protrusion 201a1 are in contact with each other. As a result, the joined portion 212 is ultrasonic welded with good quality.

It should be noted that the joined portion 212 may be joined by resistance welding. When resistance welding is employed, resistance welding electrodes are pressed against the first metal 201 and the second metal 202 and energized, in place of the horn 302 and the anvil 301. In this case as well, because the gap 213 exists around the joined portion 212, electric current is applied intensively to the bottom of the recess 202a1 and the top portion of the protrusion 201a1 so that the interface between the bottom of the recess 202a1 and the top portion of the protrusion 201a1 can be heated and joined together. As a result, the joined portion 212 is resistance welded with good quality. Because so-called solid phase bonding is formed in the joined portion 212 that is joined in this way, the electrical resistance between the first metal 201 and the second metal 202 is reduced.

The terminal component 200 includes the press-fit portion 211, in which the second metal 202 is press-fitted with the first metal 201. In this embodiment, the second metal 202 is press-fitted onto the outer edge 201b1 of the flange portion 201b of the first metal 201. In this embodiment, the flange portion 201b of the first metal 201 is placed in the recessed portion 202a of the second metal 202. The outer edge 201b1 of the flange portion 201b of the first metal 201 includes a sloping surface such that its diameter gradually decreases from the bottom end of the recessed portion 202a toward the open end thereof. The inner surface of the recessed portion 202a of the second metal 202 is deformed along the sloping surface. For example, the first metal 201 and the second metal 202 are ultrasonic welded with the flange portion 201b of the first metal 201 being placed in the recessed portion 202a of the second metal 202 and clamped by the horn 302 and the anvil 301, and a side edge face 202b of the second metal 202 is hammered simultaneously. Thereby, as illustrated in Fig. 4, the inner surface of the recessed portion 202a of the second metal 202 is deformed so as to hold the sloping surface of the outer edge 201b1 of the first metal 201. As a result, the inner surface of the recessed portion 202a of the second metal 202 is press-fitted onto the outer edge 201b1 of the flange portion 201b.

Thus, the first metal 201 and the second metal 202 includes the press-fit portion 211 that is mechanically press-fitted together, in addition to the joined portion 212 joined by solid-state welding such as metal joining, or by welding. Therefore, the press-fit portion 211 serves to provide mechanical bonding strength, and also the joined portion 212 serves to provide electrical conductivity due to the low electrical resistance resulting from solid-state welding. The shaft portion 201a of the first metal 201 of the terminal component 200 constitutes the shaft portion 43b2 that is inserted into the mounting hole 41b1 of the lid 41b, as illustrated in Fig. 3. The flange portion 201b of the first metal 201 and the second metal 202 placed over the flange portion 201b constitute the head portion 43b1 of the external terminal 43b, as illustrated in Fig. 3. The part of the head portion 43b1 of the external terminal 43b that is exposed outside is composed of the second metal 202 placed over the flange portion 201b (see Fig. 4).

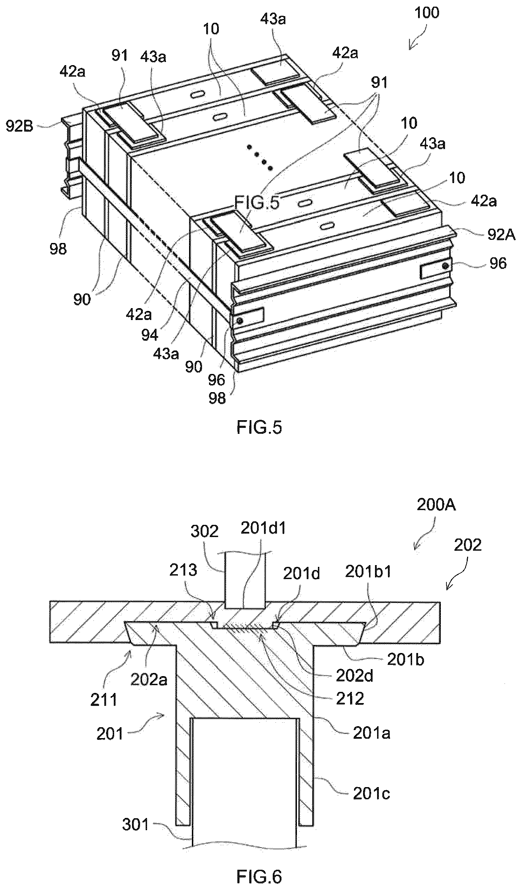

Fig. 5 is a perspective view schematically illustrating a battery pack 100. The battery pack 100 includes a plurality of secondary batteries 10 and a plurality of spacers 90. The battery pack 100 also includes a restraining mechanism. Specifically, for example, the battery pack 100 includes, as illustrated in the figure, a pair of end plates 92A and 92B, a restraining band 94, and a plurality of screws 96. The pair of end plates 92A and 92B are disposed at opposite ends of the battery pack 100 with respect to an arrangement direction of the secondary batteries 10. The restraining band 94 spans between the pair of end plates 92A and 92B and is attached to the pair of end plates 92A and 92B by the screws 96. Each of the spacers 90 is interposed between each two of adjacent secondary batteries 10. End spacers 98 are disposed respectively between the end plate 92A and the secondary battery 10 and between the end plate 92B of the secondary battery 10. The positive electrode terminals 42 and the negative electrode terminals 43 of the secondary batteries 10 that constitute the battery pack 100 are electrically connected by bus bars 91. This allows the secondary batteries 10 that constitute the battery pack 100 to be electrically connected to one another in series. Note that, however, the shape, size, number, arrangement, manner of connection, and so forth of the secondary batteries 10 constituting the battery pack 100 are not limited to those shown in the embodiments disclosed herein, but may be changed as appropriate.

The terminal component 200 shown in Fig. 4 may be used as the negative electrode external terminal 43b of the lithium-ion secondary battery 10. The external terminal 43b is connected to a bus bar 91. The external terminal 43b and the bus bar 91 may be joined together by, for example, laser welding. From the viewpoint of weight reduction, aluminum is used for the bus bar 91. The terminal component 200 proposed herein may use aluminum for the first metal 201 that is a portion of the negative electrode external terminal 43b that is exposed outside of the lithium-ion secondary battery 10. The positive electrode external terminal 42b is composed of aluminum. Therefore, dissimilar metal joint is not formed in joining between the bus bar 91 and the negative electrode external terminal 43b or joining between the bus bar 91 and the positive electrode external terminal 42b, so joining that is highly reliable in strength can be achieved. In addition, with the terminal component 200, the portion 201c (see Figs 3 and 4) of the negative electrode external terminal 43b that is joined to the internal terminal 43a inside the battery case 41 is the first metal 201, which is copper. Therefore, dissimilar metal joint is not formed in joining between the external terminal 43b and the internal terminal 43a of the negative electrode either, so joining that is highly reliable in strength can be achieved.

Thus, the terminal component 200 proposed herein includes the press-fit portion 211, the joined portion 212, and the gap 213 that are disposed at a boundary of the first metal 201 and the second metal 202. The press-fit portion 211 is a portion in which one of the first metal 201 and the second metal 202 is press-fitted to the other one. The joined portion 212 is a portion that is provided at a different location from the press-fit portion 211 and in which the first metal 201 and the second metal 202 are overlapped and joined together. The gap 213 is formed around the joined portion 212. For the joined portion 212, it is possible to adopt, for example, ultrasonic welding in which joining is achieved by applying vibration to the first metal 201 and the second metal 202 while press-contacting the interface between the first metal 201 and the second metal 202, and resistance welding in which electric current is applied to the first metal 201 and the second metal 202 while press-contacting the interface between the first metal 201 and the second metal 202. In this case, because the gap 213 is provided around the joined portion 212, it is easy to apply vibration in ultrasonic welding and electric current in resistance welding intensively to the joined portion 212. Therefore, quality of ultrasonic welding and resistance welding is improved in the joined portion 212.

The first metal 201 and the second metal 202 may be composed of dissimilar metals. The gap 213 may be continuously present around the joined portion 212. The gap 213 may be provided at least one location in a circumferential periphery of the joined portion 212. However, when the gap 213 is continuously present around the joined portion 212, vibration or electric current may be more reliably applied intensively to the joined portion 212 in ultrasonic welding or resistance welding. Therefore, quality of ultrasonic welding and resistance welding is significantly improved in the joined portion 212.

As described previously, the first metal 201 may include a shaft portion 201a and a flange portion 201b extending radially outward from one end of the shaft portion 201a. The second metal 202 may exhibit malleability and have lower rigidity than the first metal 201. The second metal 202 may be overlapped on an end of the first metal 201 including the flange portion 201b. The second metal 202 may be press-fitted to a circumferential edge of the flange portion 201b. In the embodiment shown in Fig. 4, the outer edge of the flange portion 201b of the first metal 201 is a sloping surface, and the second metal 202 is press-fitted to the outer edge of the flange portion 201b of the first metal 201. This embodiment is merely illustrative, and the outer edge of the flange portion 201b of the first metal 201 may desirably be in a shape such as to be able to hold the press-fitted second metal 202. For example, the outer edge may be provided with a protrusion or a recess.

For example, as illustrated in the embodiment shown in Fig. 4, in a location where the first metal 201 and the second metal 202 are overlapped with each other, at least one of the first metal 201 and the second metal 202 may include the protrusion 201a1, and the other one may include the recess 202a1 in which the protrusion 201al can be accommodated. The first metal 201 and the second metal 202 may be joined together by metal joining at a portion (joined portion 212) in which the tip of the protrusion 201a1 comes in contact with the bottom portion of the recess 202a1 of the other one. The gap 213 may also be formed circumferentially continuously around the protrusion 201a1. It should be noted that the embodiments proposed herein are not limited to the one shown in Fig. 4. That is, the structure of the terminal component 200 is not limited to the embodiment shown in Fig. 4, unless specifically stated otherwise.

Figs. 6 to 9 respectively illustrate terminal components, which are other embodiments of the terminal component 200. In Figs. 6 to 9, identical reference characters and descriptions are used to designate the elements or features illustrated in Fig. 1, and repetitive description thereof may be omitted as appropriate.

Fig. 6 is a cross-sectional view schematically illustrating a terminal component 200A. In the terminal component 200A, the first metal 201 includes a recess 201d formed at a portion where the joined portion 212 is to be formed, as illustrated in Fig. 6. The second metal 202 includes a protrusion 202d formed at a portion that is fitted into the recess 201d. The recess 201d is a size larger than the protrusion 202d, and a gap 213 is formed around the protrusion 202d. In this exemplary embodiment, as illustrated in Fig. 6, the first metal 201 and the second metal 202 are overlapped with each other. Thereafter, the anvil 301 is attached to the first metal 201 and the horn 302 is attached to the second metal 202. Then, vibration is applied from the horn 302 to the first metal 201 and the second metal 202 while the first metal 201 and the second metal 202 are clamped by the horn 302 and the anvil 301. In the second metal 202, a recess 201d1 is formed in advance at a portion of the second metal 202 against which the horn 302 is pressed. In addition, the press-fit portion 211 is provided at the outer edge of the flange portion 201b of the first metal 201. The second metal 202 is press-fitted to the outer edge of the flange portion 201b of the first metal 201.

The above-described terminal component 200A includes the gap 213 provided around the joined portion 212. This allows vibration to be applied intensively to the joined portion 212 when the joined portion 212 is ultrasonic welded. As a result, the joined portion 212 is ultrasonic welded with good quality. In addition, the joined portion 212 may be joined by resistance welding by using electrodes for resistance welding in place of the horn 302 and the anvil 301. In the case where the joined portion 212 is resistance welded as well, the terminal component 200A enables electric current to be applied intensively to the joined portion 212 because the gap 213 is provided around the joined portion 212. As a result, the joined portion 212 is resistance welded with good quality. In addition, the first metal 201 and the second metal 202 are provided with the press-fit portion 211 at a position different from the joined portion 212. Therefore, required mechanical joining strength is ensured for the first metal 201 and the second metal 202. As in the embodiment shown in Fig. 6, it is possible that the second metal 202 may be provided with the protrusion 202d and the first metal 201 may be formed with the recess 201d.

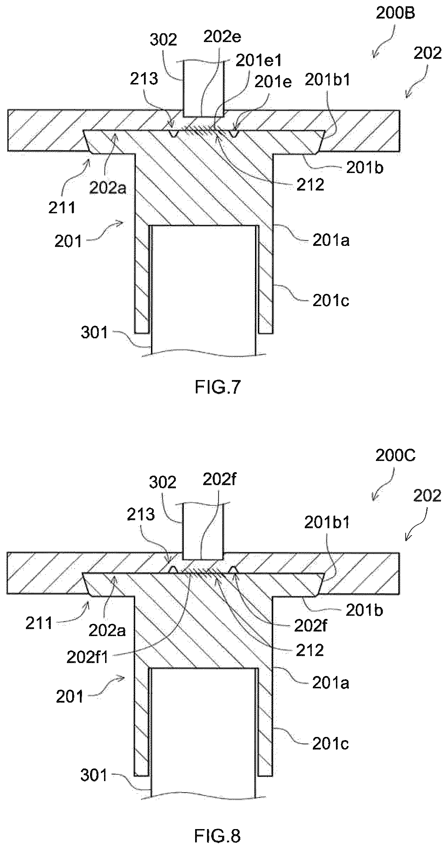

Fig. 7 is a cross-sectional view schematically illustrating a terminal component 200B. The terminal component 200B includes, as illustrated in Fig. 7, a circumferentially continuous groove 201e formed in a central region of an end of the shaft portion 201a of the first metal 201 that is provided with the flange portion 201b. A raised protrusion 201e1 is provided in a portion surrounded by the groove 201e. On the other hand, for the second metal 202, the bottom of the recessed portion 202a, which is fitted onto the end of the shaft portion 201a that is provided with the flange portion 201b, is flat.

In the exemplary embodiment shown in Fig. 7, the first metal 201 and the second metal 202 are overlapped with each other. Thereafter, the anvil 301 is attached to the first metal 201 and the horn 302 is attached to the second metal 202. Then, vibration is applied from the horn 302 to the first metal 201 and the second metal 202 while the first metal 201 and the second metal 202 are clamped by the horn 302 and the anvil 301. In the second metal 202, a recess 202e is formed in advance at a portion of the second metal 202 against which the horn 302 is pressed. In addition, the press-fit portion 211 is provided at the outer edge of the flange portion 201b of the first metal 201. The second metal 202 is press-fitted to the outer edge of the flange portion 201b of the first metal 201.

In the embodiment shown in Fig. 7, the raised protrusion 201e1 surrounded by the groove 201e at the end of the first metal 201 is joined to the second metal 202. The groove 201e is present circumferentially continuously around the protrusion 201e1. The groove 201e forms a continuous gap 213 around the joined portion 212. Because the gap 213 is formed around the joined portion 212, vibration may be more reliably applied intensively to the joined portion 212 in ultrasonic welding. As a result, quality of ultrasonic welding is significantly improved in the joined portion 212. It should be noted that the second metal 202 and the first metal 201 may be joined together by resistance welding. In the case of resistance welding as well, quality is significantly improved because electric current can be applied intensively to the joined portion 212.

Fig. 8 is a cross-sectional view schematically illustrating a terminal component 200C. For the terminal component 200C, an end of the shaft portion 201a of the first metal 201 that is provided with the flange portion 201b is flat, as illustrated in Fig. 8. The second metal 202 includes a circumferentially continuous groove 202f that is at a central region of the bottom of the recessed portion 202a, which is fitted to the end of the shaft portion 201a that is provided with the flange portion 201b. In addition, a raised protrusion 202f1 is provided in a portion of the second metal 202 that is surrounded by the groove 202f. In the exemplary embodiment shown in Fig. 8, the raised protrusion 202f1 of the second metal 202 is joined to the end of the shaft portion 201a that is provided with the flange portion 201b of the first metal 201.

In the embodiment shown in Fig. 8, the raised protrusion 202f1 surrounded by the groove 202f, which is formed at the bottom of the recessed portion 202a of the second metal 202, is joined to the first metal 201. The groove 202f is present circumferentially continuously around the protrusion 202f1. Such a groove 202f forms a continuous gap 213 around the joined portion 212. Because the gap 213 is formed around the joined portion 212, vibration may be more reliably applied intensively to the joined portion 212 in ultrasonic welding. As a result, quality of ultrasonic welding is significantly improved in the joined portion 212. It should be noted that the second metal 202 and the first metal 201 may be joined together by resistance welding. In the case of resistance welding as well, quality is significantly improved because electric current can be applied intensively to the joined portion 212.

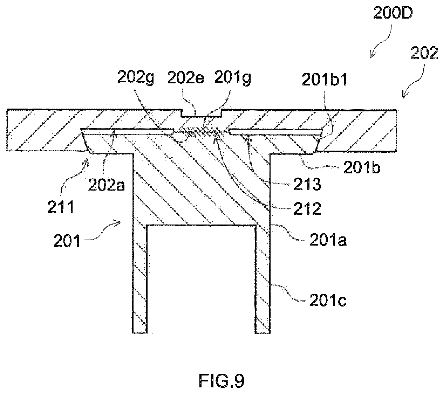

Fig. 9 is a cross-sectional view schematically illustrating a terminal component 200D according to the invention of claim 1.

The terminal component 200D includes a first protrusion 201g protruding toward the second metal 202 that is provided at an end of the shaft portion 201a that is provided with the flange portion 201b of the first metal 201, as illustrated in Fig. 9. The second metal 202 includes a second protrusion 202g provided at a central region of the bottom of the recessed portion 202a, which is fitted to the end of the shaft portion 201a that is provided with the flange portion 201b. In the embodiment shown in Fig. 9, the first protrusion 201g and the second protrusion 202g come in contact with each other when the recessed portion 202a of the second metal 202 is fitted onto the end of the shaft portion 201a that is provided with the flange portion 201b of the first metal 201. A gap 213 is formed around the location where the first protrusion 201g and the second protrusion 202g come in contact with each other. In this case, in ultrasonic welding similar to that illustrated in Fig. 4, vibration may be more reliably applied intensively to the joined portion 212, which is provided at the location where the first protrusion 201g and the second protrusion 202g come in contact with each other. As a result, quality of ultrasonic welding is significantly improved in the joined portion 212. It should be noted that the second metal 202 and the first metal 201 may be joined together by resistance welding. In the case of resistance welding as well, quality is significantly improved because electric current can be applied intensively to the joined portion 212.

## Claims

1. A terminal component (200D) comprising:
a first metal (201);
a second metal (202) overlapped on the first metal, wherein the first metal (201) and the second metal (202) are made of dissimilar metals; and
a boundary between the first metal (201) and the second metal (202), wherein:
the boundary includes:
a press-fit portion (211) in which one of the first metal and the second metal is press-fitted to the other one;
a joined portion (212) disposed at a location different from the press-fit portion, in which the first metal and the second metal are overlapped and joined together, wherein the joined portion (212) is an ultrasonic welded or resistance welded portion; and
**characterized in that** the boundary further includes
a gap (213) formed around the joined portion, wherein the gap (213) is present continuously around the joined portion (212), wherein
the first metal (201) includes a shaft portion (201a) and a flange portion (291b) extending radially outward from one end of the shaft portion;
the second metal (202) exhibits malleability and lower rigidity than the first metal;
the second metal (202) is overlapped on an end of the first metal including the flange portion (201b) and is press-fitted to a peripheral edge of the flange portion (201b); and
the first metal (201) includes a first protrusion (201g) disposed at an end thereof including the flange portion (201b), the first protrusion (201g) protruding toward the second metal; and
the second metal (202) includes a second protrusion (202g) disposed at a location in which the second metal is overlapped on the end of the first metal including the flange portion (201b), the second protrusion (202g) protruding toward the first metal and being joined to the first protrusion.

2. An electricity storage device comprising:
a battery case (41); and
an electrode terminal (43) attached to the battery case, wherein
the electrode terminal (43) includes a part including the terminal component (200) according to claim 1.

## Patentansprüche

1. Anschlusskomponente (200D), aufweisend:
ein erstes Metall (201);
ein zweites Metall (202), das sich mit dem ersten Metall überlappt, wobei das erste Metall (201) und das zweite Metall (202) aus unterschiedlichen Metallen bestehen; und
eine Grenze zwischen dem ersten Metall (201) und dem zweiten Metall (202), wobei:
die Grenze beinhaltet:
einen Presspassabschnitt (211), bei dem eines von dem ersten Metall und dem zweiten Metall auf das andere pressgepasst ist;
einen verbundenen Abschnitt (212), der sich an einem Ort befindet, der sich von dem Presspassabschnitt unterscheidet, bei dem sich das erste Metall und das zweite Metall überlappen und miteinander verbunden sind, wobei der verbundene Abschnitt (212) ein ultraschallgeschweißter oder widerstandsgeschweißter Abschnitt ist; und
**dadurch gekennzeichnet, dass** die Grenze ferner beinhaltet:
eine Lücke (213), die um den verbundenen Abschnitt herum gebildet ist, wobei die Lücke (213) kontinuierlich um den verbundenen Abschnitt (212) herum vorhanden ist, wobei
das erste Metall (201) einen Schaftabschnitt (201a) und einen Flanschabschnitt (291b) beinhaltet, der von einem Ende des Schaftabschnitts aus radial nach außen verläuft;
das zweite Metall (202) eine Formbarkeit und niedrigere Festigkeit als das erste Metall zeigt;
das zweite Metall (202) ein Ende des ersten Metalls einschließlich des Flanschabschnitts (201b) überlappt und auf eine periphere Kante des Flanschabschnitts (201b) pressgepasst ist; und
das erste Metall (201) einen ersten Vorsprung (201g) beinhaltet, der sich an einem Ende desselben einschließlich des Flanschabschnitts (201b) befindet, wobei der erste Vorsprung (201g) in Richtung des zweiten Metalls hervorsteht; und
das zweite Metall (202) einen zweiten Vorsprung (202g) beinhaltet, der sich an einem Ort befindet, an dem das zweite Metall das Ende des ersten Metalls einschließlich des Flanschabschnitts (201b) überlappt, wobei der zweite Vorsprung (202g) in Richtung des ersten Metalls hervorsteht und mit dem ersten Vorsprung verbunden ist.

2. Elektrizitätsspeichervorrichtung, aufweisend:
ein Batteriegehäuse (41); und
einen Elektrodenabschluss (43), der an dem Batteriegehäuse befestigt ist, wobei
der Elektrodenanschluss (43) einen Teil beinhaltet, der die Anschlusskomponente (200) nach Anspruch 1 beinhaltet.

## Revendications

1. Composant terminal (200D) comprenant :
un premier métal (201) ;
un deuxième métal (202) superposé sur le premier métal, dans lequel le premier métal (201) et le deuxième métal (202) sont constitués de métaux dissemblables ; et
une limite entre le premier métal (201) et le deuxième métal (202), dans laquelle :
la limite comprend :
une partie emmanchée à force (211) dans laquelle l'un des premier et deuxième métaux est emmanché à force sur l'autre ;
une partie jointe (212) disposée à un emplacement différent de la partie emmanchée à force, dans laquelle le premier métal et le deuxième métal se chevauchent et sont j oints ensemble, dans laquelle la partie j ointe (212) est une partie soudée par ultrasons ou par résistance ; et
**caractérisé en ce que** la limite comprend en outre
un espace (213) formé autour de la partie jointe, dans lequel l'espace (213) est présent de manière continue autour de la partie jointe (212), dans lequel le premier métal (201) comprend une partie d'arbre (201a) et une partie de bride (201b) s'étendant radialement vers l'extérieur à partir d'une extrémité de la partie d'arbre ;
le deuxième métal (202) présente une malléabilité et une rigidité inférieures à celles du premier métal ;
le deuxième métal (202) est superposé sur une extrémité du premier métal comprenant la partie bride (201b) et est emmanché à force sur un bord périphérique de la partie bride (201b) ; et
le premier métal (201) comprend une première saillie (201g) disposée à une extrémité de celui-ci comprenant la partie de bride (201b), la première saillie (201g) faisant saillie vers le deuxième métal ; et
le deuxième métal (202) comprend une deuxième saillie (202g) disposée à un emplacement où le deuxième métal recouvre l'extrémité du premier métal comprenant la partie de bride (201b), la deuxième saillie (202g) faisant saillie vers le premier métal et étant reliée à la première saillie.

2. Dispositif de stockage d'électricité comprenant :
un boîtier de batterie (41) ; et
une borne d'électrode (43) fixée au boîtier de batterie, dans lequel
la borne d'électrode (43) comprend une partie comprenant le composant de borne (200) selon la revendication 1.
